# EUROPEAN PATENT APPLICATION

(11) **EP 4 645 872 A1**
(43) Date of publication of application: **05.11.2025**
(21) Application number: 23914835.6
(22) Date of filing: 02.01.2023
(51) Int. Cl.: H04N 21/238, H04N 21/262, H04N 21/438, H04N 21/485

(54) **DISPLAY DEVICE AND OPERATION METHOD THEREFOR**

(71) Applicant: LG Electronics Inc., Yeongdeungpo-gu Seoul 07336 (KR)
(72) Inventor: PARK, Sang Chul, Seoul 06772 (KR)
(74) Representative: Schott, Jakob Valentin
(86) International application number: PCT/KR2023/000033
(87) International publication number: WO 2024/147369

(57) **Abstract**

A display device according to an embodiment of the present disclosure may comprise: a display for displaying a first image image-processed through a main path; and a controller which receives a signal of a second image corresponding to the next image through a sub path so as to perform image processing on the second image if the next image is present or predicted, and which displays the image-processed second image at an end time point of the first image.

## Description

### [Technical Field]

The present disclosure relates to a display device and an operating method thereof.

### [Background Art]

Digital TV services using wired or wireless communication networks are becoming common. The digital TV services may provide various services that cannot be provided by existing analog broadcasting services.

For example, in the case of IPTV (Internet Protocol Television) and smart TV services, which are types of digital TV services, interactivity is provided so that users can actively select the types of programs to watch, the viewing time, and the like. IPTV and smart TV services may provide various additional services, such as Internet search, home shopping, online games, Over The Top (OTT), etc., based on such interactivity.

In addition, videos displayed on digital TVs can be received through various inputs. For example, videos received through various inputs such as HDMI, Live TV, and CP apps can be switched. As inputs become more diverse, the frequency of video switching also increases.

In the past, when switching videos, the sound and screen were turned off and then the video signal to be switched was received and processed. In this case, that is, after the current video was finished, preparations for displaying the next video began, which caused inconvenience to the user who had to wait when switching videos.

### [Disclosure]

### [Technical Problem]

An object of the present disclosure is to provide a display device and an operating method thereof that minimizes the user's waiting time when switching between videos.

The object of the present disclosure is to provide a display device and an operating method thereof that smoothly switches between videos when displaying the next video after the current video ends.

### [Technical Solution]

A display device according to an embodiment of the present disclosure comprises a display configured to display a first video image-processed through a main path, and a controller configured to if a next video exists or is predicted, receive a second video signal corresponding to the next video through a sub path and perform image processing the received second video signal, and control the display to display a second video image-processed at an end time point of the first video.

The controller may obtain whether or not the next video exists based on next video information received from a contents provider server when the first video is provided from the contents provider server.

The controller may receive the second video signal through the sub path based on the next video information.

If the first video is a video received through an input other than a main usage input while one of inputs is set as the main usage input, the controller may predict a video of the main usage input as the next video.

If the video of the main usage input is predicted as the next video, the controller may perform image processing by receiving the second video signal from the main usage input through the sub path.

If the next video exists or is predicted while displaying the second video image-processed through the sub path, the controller may perform image processing by receiving a third image signal corresponding to the next video through the main path.

The controller may control the display to display a third video image-processed at an end time point of the second video.

The controller may control the display to display the second video by changing Z-order at the end time point of the first video.

The controller may control the display to display a menu to set whether switch videos seamlessly.

The controller may perform image processing by receiving the second video signal through the sub path while displaying the first video, if seamless switching of the video is set through the menu.

The controller may perform image processing by receiving the second video signal through the main path after playback of the first video is end, if seamless switching of the video is not set through the menu.

The controller may output a message for obtaining whether to receive the second video signal in advance before receiving the second video signal via the sub path.

The controller may output the message before a predetermined time from the end time point of the first video.

The controller may output the message when the seamless switching of the video is not set, and not output the message when the seamless switching of the video is set and perform image processing by receiving the second video signal through the sub path.

The controller may perform image processing by receiving a second video signal corresponding to a next video in advance while displaying the first video, if the next video exists or is predicted.

### [Advantageous Effects]

According to an embodiment of the present disclosure, there is an advantage of minimizing the user's waiting time until the next video is displayed by receiving and processing the signal of the next video in advance while displaying a current video.

According to an embodiment of the present disclosure, there is an advantage of improving the video switching speed by predicting and preparing in advance the next video that is likely to be switched while displaying the current video.

### [Description of Drawings]

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device 200 according to an embodiment of the present disclosure.
FIG. 4 shows an example of utilizing a remote control device according to an embodiment of the present disclosure.
FIG. 5 is a schematic diagram illustrating a process in which a conventional display device automatically switches from a current video to a next video.
FIG. 6 is a flowchart illustrating an operation method of a display device according to an embodiment of the present disclosure.
FIG. 7 is a schematic diagram illustrating a process in which a display device according to an embodiment of the present disclosure automatically switches from a current video to a next video.
FIG. 8 is a diagram for explaining a method of switching videos when an advertisement is inserted in the middle of content in a display device according to an embodiment of the present disclosure.
FIG. 9 is a drawing for explaining a method for switching videos when a display device according to an embodiment of the present disclosure plays content of the next episode.
FIG. 10 is an example of a method for providing a menu for setting whether to perform seamless switching in a display device according to an embodiment of the present disclosure.
FIG. 11 is an example of a method for outputting a message for obtaining whether to receive a next video signal in advance in a display device according to an embodiment of the present disclosure.

### [Best Mode]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

A display device according to an embodiment of the present disclosure is, for example, an intelligent display device in which a computer support function is added to a broadcast reception function, and may have an easy-to-use interface such as a handwritten input device, a touch screen, a spatial remote control, or the like since an Internet function is added while fulfilling the broadcast receiving function. In addition, it is connected to the Internet and a computer with the support of a wired or wireless Internet function, so that functions such as e-mail, web browsing, banking, or games can also be performed. A standardized general-purpose OS may be used for these various functions.

Accordingly, in the display device described in the present disclosure, various user-friendly functions can be performed because various applications can be freely added or deleted, for example, on a general-purpose OS kernel. More specifically, the display device may be, for example, a network TV, HBBTV, smart TV, LED TV, OLED TV, and the like, and may be applied to a smart phone in some cases.

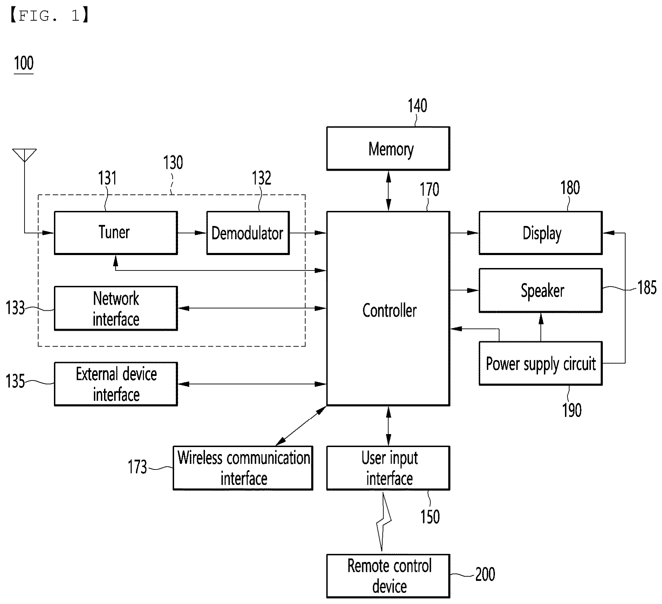

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The network interface 133 may provide an interface for connecting the display device 100 to a wired/wireless network including an Internet network. The network interface 133 may transmit or receive data to or from other users or other electronic devices through a connected network or another network linked to the connected network.

In addition, a part of content data stored in the display device 100 may be transmitted to a selected user among a selected user or a selected electronic device among other users or other electronic devices registered in advance in the display device 100.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a contents provider or a network operator. That is, the network interface 133 may receive content such as movies, advertisements, games, VOD, and broadcast signals and information related thereto provided from a contents provider or a network provider through a network.

In addition, the network interface 133 may receive update information and update files of firmware provided by the network operator, and may transmit data to an Internet or contents provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100.

Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

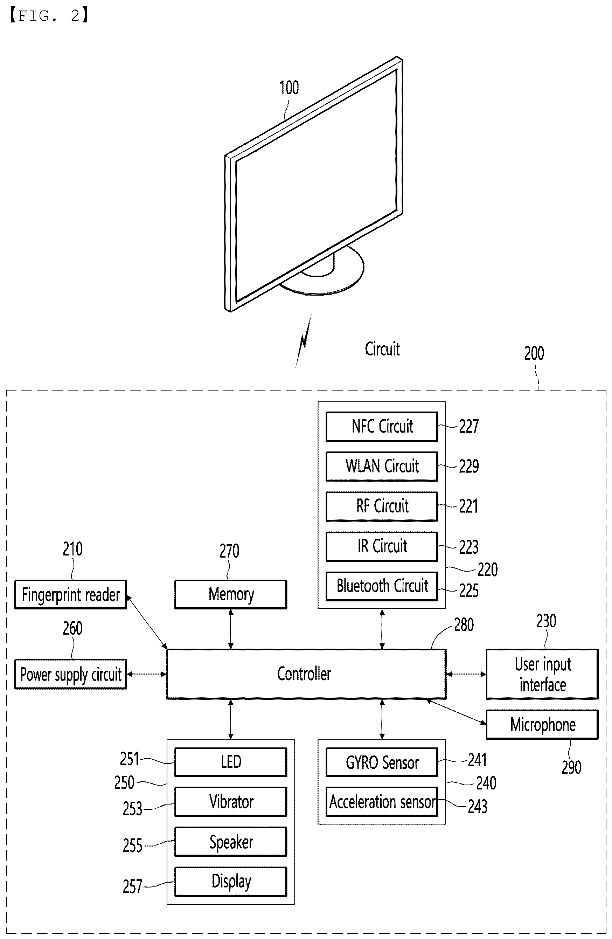

Next, a remote control device according to an embodiment of the present disclosure will be described with reference to FIGS. 2 to 3.

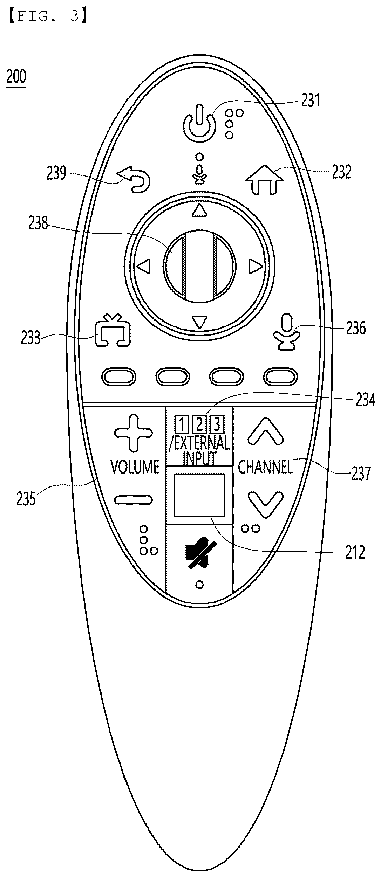

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation.

The power button 231 may be a button for turning on/off the power of the display device 100.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the level of the volume output by the display device 100.

The voice recognition button 236 may be a button for receiving a user's voice and recognizing the received voice.

The channel change button 237 may be a button for receiving a broadcast signal of a specific broadcast channel.

The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100.

The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication interface 225.

In addition, the power supply circuit 260 may supply power to the remote control device 200, and stop power supply when the remote control device 200 has not moved for a predetermined time to reduce power consumption.

The power supply circuit 260 may restart power supply when a predetermined key provided in the remote control device 200 is operated.

The memory 270 may store various types of programs and application data required for control or operation of the remote control device 200.

When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 235 or a signal corresponding to the movement of the remote control device 200 sensed by the sensor 240 through the wireless communication interface 225.

Also, the microphone 290 of the remote control device 200 may obtain a speech.

A plurality of microphones 290 may be provided.

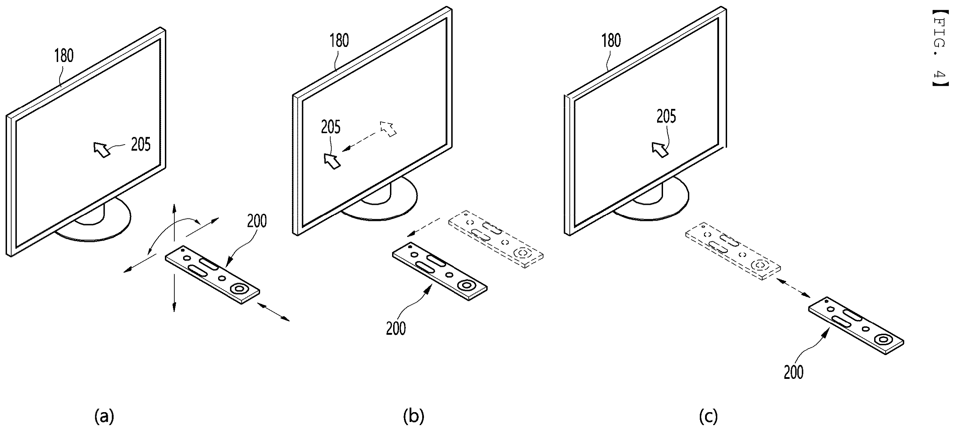

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

If the display device 100 plays the currently playing video to the end, it can stop playing the current video and automatically play the next video. Or, if an advertisement video is inserted in the middle of the currently playing video, the display device 100 can stop playing the current video at the time of the advertisement playback, play the advertisement video, and then resume playing the current video that was stopped when the advertisement video ends. In other words, there are many cases where the display device 100 automatically switches to another video while playing the current video.

In the past, in order for the display device 100 to automatically switch videos, it went through several processes, such as muting the currently playing video.

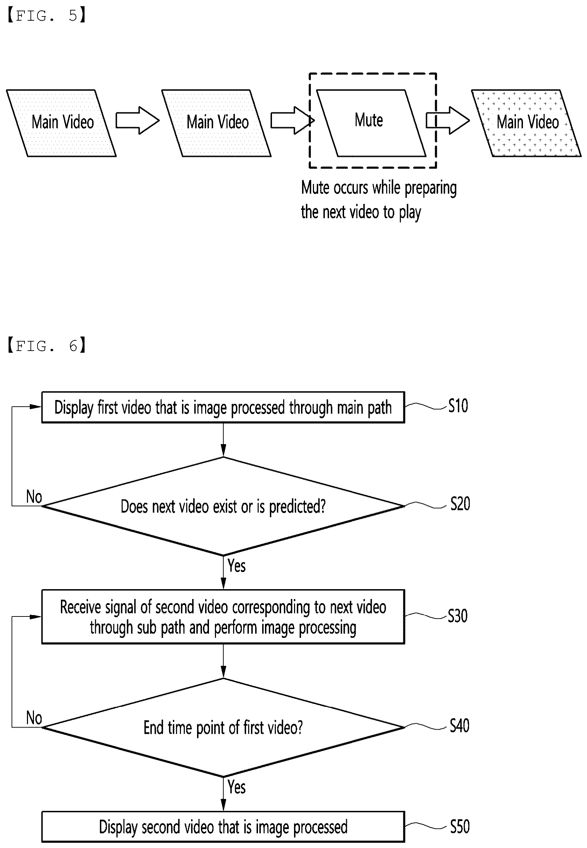

FIG. 5 is a schematic diagram illustrating a process in which a conventional display device automatically switches from the current video to the next video.

The conventional display device can play a video, and the currently playing video is expressed as the main video in FIG. 5. Here, the main video can represent a video that has been signal-processed through the main path.

The main path is described as follows.

The display device 100 may be equipped with a plurality of image processing modules. For example, the display device 100 may include two image processing modules (not shown). In the present disclosure, it is assumed that the display device 100 includes a first image processing module (not shown) and a second image processing module (not shown), but this is only for convenience of explanation and therefore is not limited thereto. The first and second image processing modules (not shown) may be components included in the controller 170. The first and second image processing modules (not shown) may each be modules that process input image signals so that they can be output from the display 180. One of the first and second image processing modules (not shown) may be a main image processing module, and the other may be a sub image processing module. If the specifications of one of the first and second image processing modules (not shown) are better than those of the other, the image processing module with the better specifications may be the main image processing module, and the other may be the sub image processing module. Alternatively, when one video signal is input while both the first and second image processing modules (not shown) are on standby, the image processing module set to process the input video signal may be the main image processing module, and the other may be the sub image processing module.

In this specification, the path through which the input video signal is signal-processed by the main image processing module is referred to as the main path, and the main video represents the video signal-processed by the main image processing module. The path through which the input video signal is signal-processed by the sub image processing module is referred to as the sub path, and the sub video represents the video signal-processed by the sub image processing module.

The conventional display device 100 can mute the current video when the current video ends and switches to the next video. Mute may be an operation of turning off at least one of the sound or the screen. That is, the display device 100 can turn off both the sound and the screen while preparing the next video to display the next video on the display 180. While muted, the display 180 can display a black screen.

The display device 100 can disconnect the connection with the current main path video input after mute. The display device 100 can organize the resources of the main image processing module based on the next video information. The display device 100 can connect the input corresponding to the next video signal to the main path. The display device 100 can signal process the next video signal through the main image processing module and release the mute to display the next video as the main video.

This process takes from a few milliseconds to several seconds, resulting in a time when the user waits while looking at a black screen. In other words, there is a disadvantage in that the waiting time occurs and the video switching is not smooth.

The present disclosure aims to provide a display device that minimizes the user's waiting time when switching videos.

FIG. 6 is a flowchart illustrating an operation method of a display device according to an embodiment of the present disclosure.

The controller 170 can display a first video processed through the main path S10.

The controller 170 can display the first video processed by the main image processing module through the display 180.

The controller 170 can determine whether the next video exists or is predicted S20.

That is, the controller 170 can obtain or predict whether the next video exists.

If the next video does not exist or is not predicted, the controller 170 can continue to display the first video.

If the next video exists or is predicted, the controller 170 can receive and perform image processing on a signal of the second video corresponding to the next video through the sub path S30.

That is, the controller 170 can display the first video, and at the same time, receive the signal of the second video corresponding to the next video through the sub path, and process the received the signal of the second video.

The controller 170 can determine whether it is the end time point of the first video S40.

The controller 170 can obtain whether the playback of the first video is the end time point while receiving the second video signal and performing image processing.

The controller 170 can continuously display the first video if it is not the end time point of the first video, and can simultaneously receive the second video signal and perform image processing through the sub path.

The controller 170 can display the processed second video if it is the end time point of the first video S50.

The controller 170 can change the Z-order at the end time point of the first video to display the second video on the display 180.

The Z-order indicates the order of objects along the Z-axis. That is, the Z-order can represent the order in which multiple windows running on display device 100 are listed along the Z-axis, that is, from the front to the back of display 180. The Z-order can include information on the front and back order of the windows. The frontmost window can be displayed on the screen of the display 180.

The controller 170 can change the Z-order so that the second video is located at the frontmost position at the end time point of the first video. That is, the controller 170 attempts to implement a smooth video switching by changing the Z-order when automatically switching from the current video to the next video.

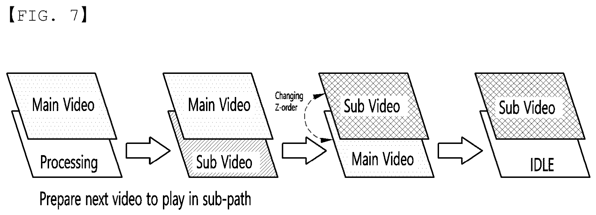

FIG. 7 is a schematic diagram illustrating a process in which a display device according to an embodiment of the present disclosure automatically switches from the current video to the next video.

In FIG. 7, the window shown at the top is the window located at the frontmost position, that is, the video displayed on the display 180. In FIG. 7, the window shown at the bottom represents the window following the window located at the very front.

Referring to FIG. 7, the controller 170 may display the main video on the display 180. The controller 170 may display the main video while receiving a video signal corresponding to the next video through the sub path and performing video processing. The controller 170 may prepare to display the sub video on the display 180 while displaying the main video.

The controller 170 can transform the Z-order of the main video and the sub video at the end time point of the first video. That is, when reaching the end time point of the first video, the controller 170 can change the Z-order of the main video and the sub video so that the sub video is positioned at the front. Accordingly, the display 180 can display the second video immediately after the first video ends without additional waiting time.

The controller 170 can continuously display the second video received and processed through the sub path on the display 180. At this time, the main path may not be in operation (IDLE).

In addition, the controller 170 can acquire and predict the existence of the next video while displaying the second video on the display 180. If the next video exists or is predicted while displaying the second video processed through the sub path, the controller 170 can receive a third video signal corresponding to the next video through the main path and perform image processing. In this case, the main path on the far right in FIG. 7 can be changed from an IDLE state to a state in which a third video signal is received and image processing is performed. The controller 170 can obtain the end time point of the second video and change the Z-order at the end time point of the second video to display the third video on the display 180.

In summary, the controller 170 displays a signal-processed image through one of the main path and the sub path, and at this time, acquires next video information, and performs signal processing through the other path if there is next video information.

Meanwhile, the method by which the controller 170 acquires and predicts the existence of the next video may vary.

The method of acquiring and predicting the existence of the next video may vary depending on the currently playing video.

According to one embodiment, if the first video is a video provided by a contents provider server, the controller 170 may acquire the existence of the next video based on the next video information received from a CP Server (Contents Provider server).

The next video information may mean information about the video to be played after the currently playing video.

For example, if the current video is a content, the next video may be an advertisement inserted in the middle of the currently playing content. Meanwhile, if the current video is an advertisement, the next video may be a content that continues the content that was playing before the advertisement video.

As another example, if the current video is a content, the next video may be a content that corresponds to the next episode of the content corresponding to the current video.

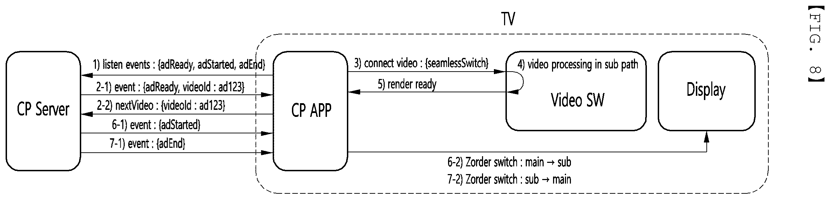

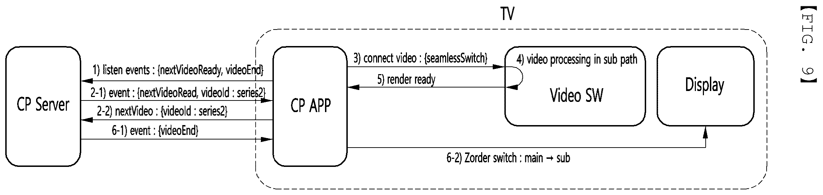

Next, with reference to the example of FIG. 8, a method for switching videos is specifically explained when an advertisement is inserted in the middle of content, and with reference to the example of FIG. 9, a method for switching videos is specifically explained when the content of the next episode is played.

FIG. 8 is a drawing for explaining a method for switching videos when an advertisement is inserted in the middle of content in a display device according to an embodiment of the present disclosure.

In the example of FIG. 8, the CP Server is a contents provider server and represents an external server. The CP APP is an application running on the display device 100 and can be controlled by the controller 170. The Video SW can connect and manage video inputs to each of the main path and sub path. The Display represents the display 180.
1) The Controller 170 registers an event listener including adReady / adStarted / adEnd,
2-1) The CP Server can notify the controller 170 of the display device 100 that an inserted video such as an advertisement will be played soon. Specifically, the CP Server can transmit an adReady event to the controller 170 a predetermined time (e.g., 5 seconds) before playing an advertisement. At this time, the CP server can transmit the videoId of the advertisement video to the controller 170.
2-2) When the controller 170 receives the adReady event, it can call the nextVideo(videoId) API of the CP server to receive the advertisement video resource.
3) The controller 170 can request the video resource received from the CP server to be connected to the Video SW. At this time, the controller 170 can notify whether or not to perform a seamless switching using the API of the SW Module, etc.
4) The Video SW can check the transmitted seamless switching information, connect a new video to a path that is not currently displaying the video, and perform rendering.
5) When the next video is ready to be played, the Video SW can call the render ready API to the APP to notify the next video playback preparation is complete.

The APP can change the Z-order of the display device at the advertisement playback timing to perform a seamless switching to the next video.

6-1) The CP server can generate an adStarted event to notify the controller 170 of advertisement video playback. 6-2) The controller 170 can change the Z-order of the display device 100.

When the advertisement video playback is complete (playback end time point), the controller 170 can change the Z-order again to switch the input to the content that was previously being viewed.

7-1) The CP server can generate an adEnd event to notify the controller 170 of the end of the advertisement video. 7-2) The controller 170 can change the Z-order of the display device 100.

FIG. 9 is a diagram for explaining a method for switching videos when a display device according to an embodiment of the present disclosure plays content of the next episode.

Each block illustrated in FIG. 9 is the same as described in FIG. 8.
1) The controller 170 can register an event listener including nextVideoReady / videoEnd and transmit a signal notifying the registration of the event listener to the CP server.

The CP server can notify the controller 170 that the next episode video will be played soon. Specifically, 2-1) The CP server can transmit the nextVideoReady event to the controller 170 a predetermined time (e.g., 5 seconds) before the current video ends. At this time, the CP server can transmit the videoId of the next episode video to the controller 170.

2-2) When the controller 170 receives the nextVideoReady event, it can call the nextVideo(videoId) API of the CP server to receive the next episode video resource.

3) The controller 170 can request the Video SW to connect the video resource received from the CP server. At this time, the controller 170 can notify whether or not to perform a seamless switching using the API of the SW Module, etc.

4) The Video SW can check the transmitted seamless switching information, connect a new video to a path that is not currently displaying the video, and perform rendering.

5) When the video SW is ready to play the next video, it can call the render ready API to the APP to notify that the next video is ready to play.

6) The controller 170 can change the Z-order at the end time point of the current episode video to perform a seamless switching to the next episode video. Specifically, 6-1) The CP server can generate a videoEnd event to notify the controller 170 of the end of the current video. 6-2) The controller 170 can change the Z-order of the display device 100 to play the video of the next episode and display it on the display 180.

In the above examples, the controller 170 can determine whether the next video exists by receiving the next video information from the contents provider server. The next video information may include an adReady event, a nextVideoReady event, a video Id, etc. in the above examples.

If the first video is a video provided from the contents provider server, the controller 170 can receive the second video signal through the sub path based on the next video information.

Meanwhile, according to another embodiment, the controller 170 can predict whether the next video exists and the next video based on the input of the currently displayed video.

Specifically, the controller 170 can set the input that the user uses the most as the main usage input. The controller 170 can count the time connected to each of the multiple inputs and set the input that has been connected the longest as the main usage input.

The controller 170 can predict the video of the main usage input as the next video if the first video is a video received through an input other than the main usage input while one of the inputs is set as the main usage input. In other words, if a video of an input other than the main usage input is being received, there is a high possibility that it will be switched to the main usage input, and therefore the video of the main usage input can be predicted as the next video. If the controller 170 predicts the video of the main usage input as the next video, it can receive the second video signal from the main usage input through the sub path and perform image processing.

As a specific example, the controller 170 can receive and process videos from HDMI 1 through the sub path when HDMI 1 is set as the main usage input and the current video is input from HDMI 2 and processed through the main path. When the controller 170 receives an input switching command from HDMI 2 to HDMI 1, it can seamlessly switch videos by changing the Z-order.

As explained through the examples described above, the present disclosure can perform image processing by receiving a video signal corresponding to the next video in advance when the next video exists or is predicted while displaying the current video. That is, the controller 170 can perform image processing by receiving a second video signal corresponding to the next video in advance while displaying the first video. In the present disclosure, seamless switching may mean an operation of receiving and processing a signal of the next video in advance.

In this way, if the signal of the next video is received in advance and processed, there is an advantage of being able to provide the next video by minimizing the user's waiting time.

Meanwhile, since the next video signal is processed together with the current video signal during seamless switching, the video processing load may increase.

Accordingly, according to one embodiment, the display device 100 may provide a menu for selecting whether to perform seamless switching.

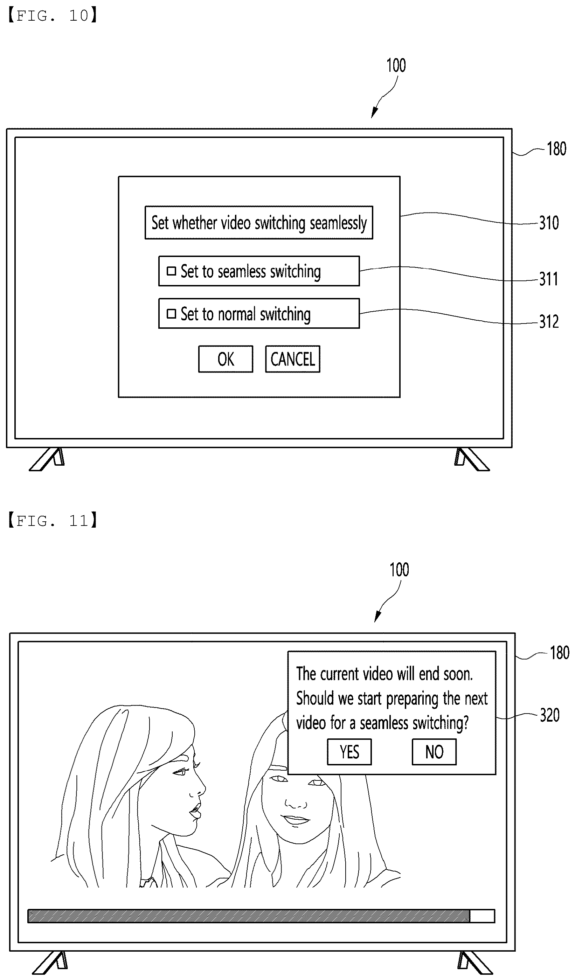

FIG. 10 is an example of a method for providing a menu for setting whether to execute seamless switching in a display device according to an embodiment of the present disclosure.

The controller 170 may display a seamless switching set menu 310 of a video. The seamless switching set menu 310 of the video may include a first item 311 for setting to seamless switching and a second item 312 for setting to normal switching.

When the first item 311 is selected, the controller 170 may execute seamless switching during video playback. That is, when seamless switching is set to be executed, the controller 170 may acquire and predict whether there is a next video during video playback and receive and process a signal of the next video in advance.

When the second item 312 is selected, the controller 170 may not execute seamless switching during video playback. That is, if seamless switching is set to be not executed, the controller 170 can prepare the next video after muting when the playback of the current video ends.

In summary, if the seamless switching of the video is set through the menu 310, the controller 170 can perform video processing by receiving the second video signal through the sub path while displaying the first video through the main path. If the seamless switching of the video is not set through the menu 310, the controller 170 can perform video processing by receiving the second video signal through the main path after the playback of the first video being displayed through the main path ends.

According to another embodiment, the display device 100 can output a message for obtaining whether to receive the second video signal in advance before receiving the second video signal through the sub path while displaying the first video through the main path.

FIG. 11 is an example of a method for outputting a message for obtaining whether to receive a next video signal in advance before a display device according to an embodiment of the present disclosure receives a next video signal.

As in the example of FIG. 11, the controller 170 may display a message 320 for obtaining whether to receive a next video signal in advance. The message 320 may include a guidance phrase such as "The current video will end soon. Shall we start preparing the next video for seamless switching?", but this is only an example and thus it is reasonable that it is not limited thereto.

The controller 170 may output the message 320 a predetermined time before the end time point of the first video being displayed through the main path. For example, the controller 170 may output the message 320 when it receives an adReady event or a nextVideoReady event from the CP server.

Alternatively, the controller 170 may output or not output the message 320 based on whether the seamless switching described in FIG. 10 is set. That is, the controller 170 may output the message 320 if the seamless switching of the video is not set. If the seamless switching of the video is not set, the controller 170 may output the message 320 at a point in time when the next video exists or is predicted.

If the seamless switching of the video is not set, the controller 170 may not output the message 320, and may perform image processing by receiving the second video signal through the sub path while outputting the first video through the main path.

If the video switcing from content->advertisement->content is performed without loading or muting, it can be confirmed that the seamless switching according to the present disclosure has been applied. In particular, when the video switching is performed with the resolution set to the highest quality of 4K or higher, it can be confirmed that the seamless switching according to the present disclosure has been applied by checking whether loading or muting occurs.

In addition, when switching inputs between HDMI, Live TV, or CP apps using a high-performance camera, etc., the screen can be captured frame by frame to check whether muting occurs, and it can be confirmed that the seamless switching according to the present disclosure has been applied.

According to one embodiment of the present disclosure, the above-described method can be implemented as a processor-readable code on a medium in which a program is recorded. Examples of the processor-readable medium include ROM, RAM, CD-ROM, magnetic tape, floppy disk, optical data storage device, etc.

The display device described above is not limited to the configuration and method of the embodiments described above, and the embodiments may be configured by selectively combining all or part of each embodiment so that various modifications can be made.

## Claims

1. A display device, comprising:
a display configured to display a first video image-processed through a main path; and
a controller configured to:
if a next video exists or is predicted, receive a second video signal corresponding to the next video through a sub path and perform image processing the received second video signal, and
control the display to display a second video image-processed at an end time point of the first video.

2. The display device of claim 1, wherein the controller is configured to:
obtain whether or not the next video exists based on next video information received from a contents provider server when the first video is provided from the contents provider server.

3. The display device of claim 2, wherein the controller is configured to:
receive the second video signal through the sub path based on the next video information.

4. The display device of claim 1, wherein the controller is configured to:
if the first video is a video received through an input other than a main usage input while one of inputs is set as the main usage input, predict a video of the main usage input as the next video.

5. The display device of claim 4, wherein the controller is configured to:
if the video of the main usage input is predicted as the next video, perform image processing by receiving the second video signal from the main usage input through the sub path.

6. The display device of claim 1, wherein the controller is configured to:
if the next video exists or is predicted while displaying the second video image-processed through the sub path, perform image processing by receiving a third image signal corresponding to the next video through the main path.

7. The display device of claim 6, wherein the controller is configured to:
control the display to display a third video image-processed at an end time point of the second video.

8. The display device of claim 1, wherein the controller is configured to:
control the display to display the second video by changing Z-order at the end time point of the first video.

9. The display device of claim 1, wherein the controller is configured to:
control the display to display a menu to set whether switch videos seamlessly.

10. The display device of claim 9, wherein the controller is configured to:
perform image processing by receiving the second video signal through the sub path while displaying the first video, if seamless switching of the video is set through the menu.

11. The display device of claim 9, wherein the controller is configured to:
perform image processing by receiving the second video signal through the main path after playback of the first video is end, if seamless switching of the video is not set through the menu.

12. The display device of claim 1, wherein the controller is configured to:
output a message for obtaining whether to receive the second video signal in advance before receiving the second video signal via the sub path.

13. The display device of claim 12, wherein the controller is configured to:
output the message before a predetermined time from the end time point of the first video.

14. The display device of claim 12, wherein the controller is configured to:
output the message when the seamless switching of the video is not set, and
not output the message when the seamless switching of the video is set and perform image processing by receiving the second video signal through the sub path.

15. The display device of claim 1, wherein the controller is configured to:
perform image processing by receiving a second video signal corresponding to a next video in advance while displaying the first video, if the next video exists or is predicted.
